# EUROPEAN PATENT APPLICATION

(11) **EP 4 790 850 A1**
(43) Date of publication of application: **12.08.2026**
(21) Application number: 25175324.0
(22) Date of filing: 09.05.2025
(51) Int. Cl.: H01R 27/02, H01R 31/06, H02G 3/14, H02J 7/00, H01R 24/78

(54) **SOCKET ASSEMBLY**

(30) Priority: 05.02.2025 CN 202510129734
(71) Applicant: Delta Electronics, Inc., Taoyuan City 33370 (TW)
(72) Inventor: Hsu, Ming-Jen, 32063 Taoyuan City (TW); Hsu, Yu-Yun, 32063 Taoyuan City (TW); Tung, Nien-Wei, 32063 Taoyuan City (TW)
(74) Representative: Uexküll & Stolberg

(57) **Abstract**

The present disclosure provides a socket assembly (100, 200, 300). The socket assembly (100, 200, 300) includes a socket (1) and a power supply expansion component (2). The socket (1) includes a first housing (11) and a first terminal group (13). The first terminal group (13) is disposed on the first housing (11) and electrically coupled with a power source. The power supply expansion component (2) includes a second housing (21), a second terminal group (23) and a power transmission unit (22). The second terminal group (23) is disposed on the second housing (21) and electrically coupled with the power transmission unit (22). When the first housing (11) is assembled with the second housing (21), the first terminal group (13) and the second terminal group (23) are contacted to establish electrical conduction, and the power source supplies electric energy to the power transmission unit (22) through a transmission path formed by the first terminal group (13) and the second terminal group (23).

## Description

### FIELD OF THE INVENTION

The present disclosure relates to an electrical connection device, and more particularly to a socket assembly.

### BACKGROUND OF THE INVENTION

Currently, the traditional wall-mounted socket is used to be plugged with a connector of an electronic device, so that electric energy from a power source is transmitted to the electronic device via the connector. The connector of the electronic device is usually a plug, a transformer or a power converter, and the connector is electrically connected to the electronic device through wires. Consequently, electric energy is provided to the electronic device through the transmission path formed by the socket, the connector and the wires. In other words, traditional sockets cannot directly provide electric energy to the electronic devices without the connectors and the wires.

On the other hand, the traditional wall-mounted socket can only provide a specific number of slots for corresponding terminals of the connectors to be plugged therein. Namely, the wall-mounted socket is not expandable. In order to expand the number of connectors that can be electrically connected to the socket, it is necessary to use an extension cord socket for expansion, which causes the disadvantages of low application flexibility, low convenience, and space occupation issues.

Therefore, there is a need of providing a socket assembly to obviate the drawbacks encountered from the prior arts.

### SUMMARY OF THE INVENTION

It is an objective of the present disclosure to provide a socket assembly, which can address the issues encountered from the prior arts and achieve the advantages of expanding power transmission units, enhancing application convenience, saving space, and reducing the risk of poor contact.

In accordance with an aspect of the present disclosure, there is provided a socket assembly. The socket assembly includes a socket and a power supply expansion component. The socket is configured to provide electric energy from a power source to an electronic device through a transmission path of the socket and a plug. The socket includes a first housing, a first power transmission unit and at least one first terminal group. The first housing includes a first part and a second part. The first part is in connection with the second part, and includes a first top surface and at least one side surface. The at least one side surface is in connection with a periphery of the first top surface. The first power transmission unit is disposed in the first housing, electrically coupled with the power source, and configured to pluggably connect to the plug of the electronic device. The at least one first terminal group is disposed on the at least one side surface, and electrically coupled with the power source. The power supply expansion component includes a second housing, at least one second terminal group and at least one second power transmission unit. The second housing includes a hollow portion, and sidewalls surrounding the hollow portion have at least one inner surface. The first part of the first housing is matched with and detachably assembled to the hollow portion. The at least one second terminal group is disposed on the at least one inner surface. The at least one second power transmission unit is disposed in the second housing, and electrically coupled with the at least one second terminal group. The first part of the first housing of the socket is matched and assembled with the hollow portion of the second housing, the at least one first terminal group and the at least one second terminal group are contacted to establish electrical conduction, and the power source supplies electric energy to the at least one second power transmission unit through the transmission path formed by the at least one first terminal group and the at least one second terminal group.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a socket assembly mounted on a wall surface according to a first embodiment of the present disclosure;
FIG. 2 is a schematic perspective view illustrating the socket assembly in a first state according to the first embodiment of the present disclosure;
FIG. 3 is an exploded view illustrating the socket assembly of FIG. 2;
FIG. 4 is another exploded view illustrating the socket assembly of FIG. 2 from another perspective;
FIG. 5 is a schematic perspective view illustrating a socket of a socket assembly according to a variant embodiment of the present disclosure;
FIG. 6 is an exploded view illustrating a power supply expansion component of a socket assembly according to a variant embodiment of the present disclosure;
FIG. 7 is a schematic perspective view illustrating the socket assembly of FIG. 2 in a second state;
FIG. 8 is a schematic perspective view illustrating the socket assembly of FIG. 2 in a third state;
FIG. 9 is a schematic perspective view illustrating the socket assembly of FIG. 2 in a fourth state;
FIG. 10 is a schematic perspective view illustrating a socket assembly in a first state according to the second embodiment of the present disclosure;
FIG. 11 is an exploded view illustrating the socket assembly of FIG. 10;
FIG. 12 is another exploded view illustrating the socket assembly of FIG. 10 from another perspective;
FIG. 13 is a schematic perspective view illustrating the socket assembly of FIG. 10 in a second state;
FIG. 14 is a schematic perspective view illustrating a socket assembly in a third state according to the third embodiment of the present disclosure; and
FIG. 15 is a schematic perspective view illustrating the socket assembly of FIG. 14 in a fourth state.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "upper," "lower," "front," "rear," "top," "bottom," and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second" and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items.

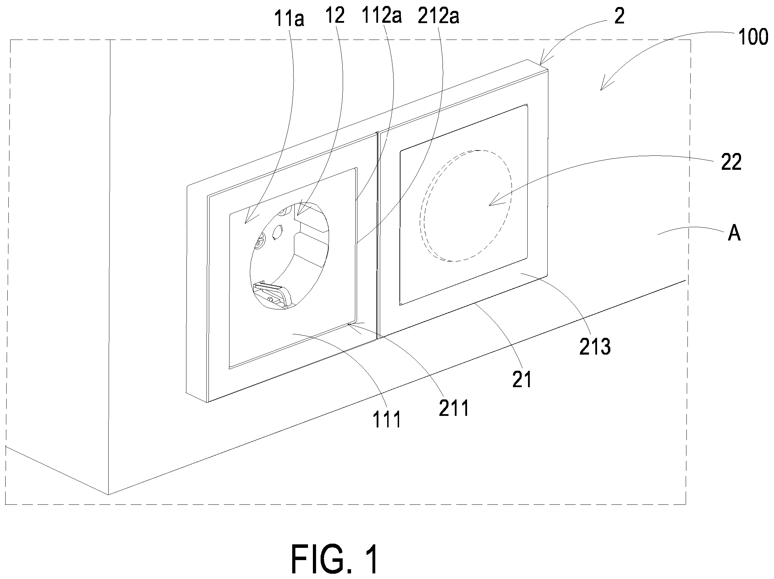

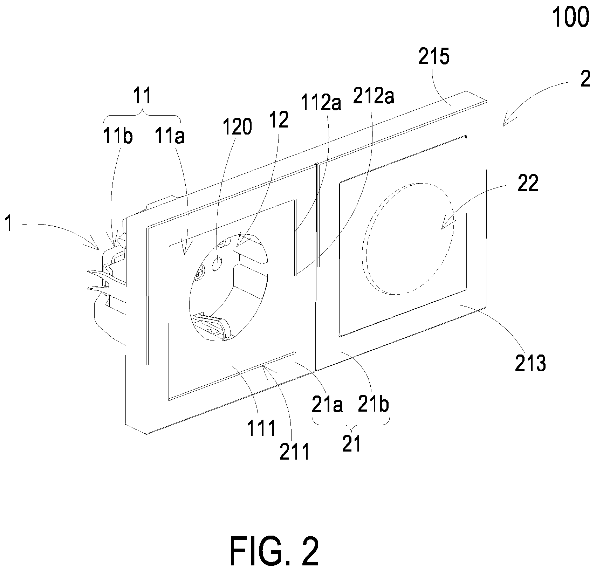

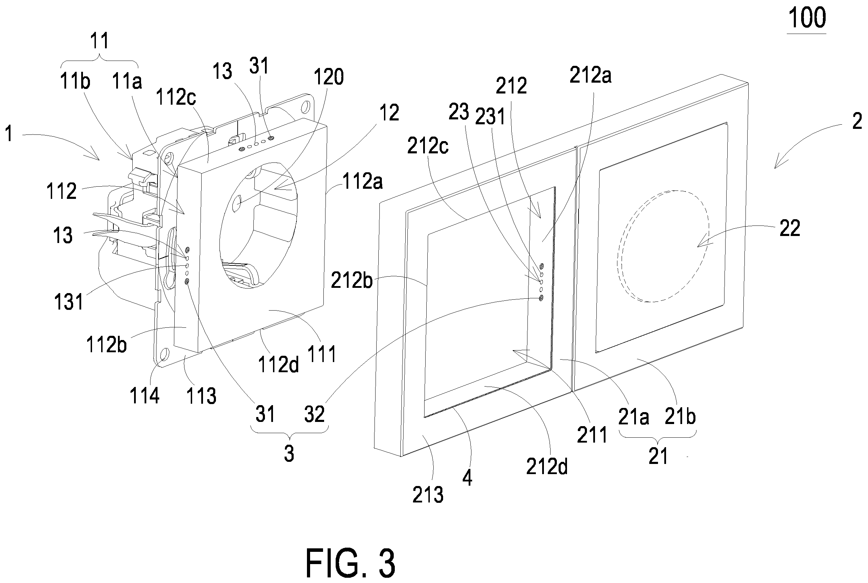

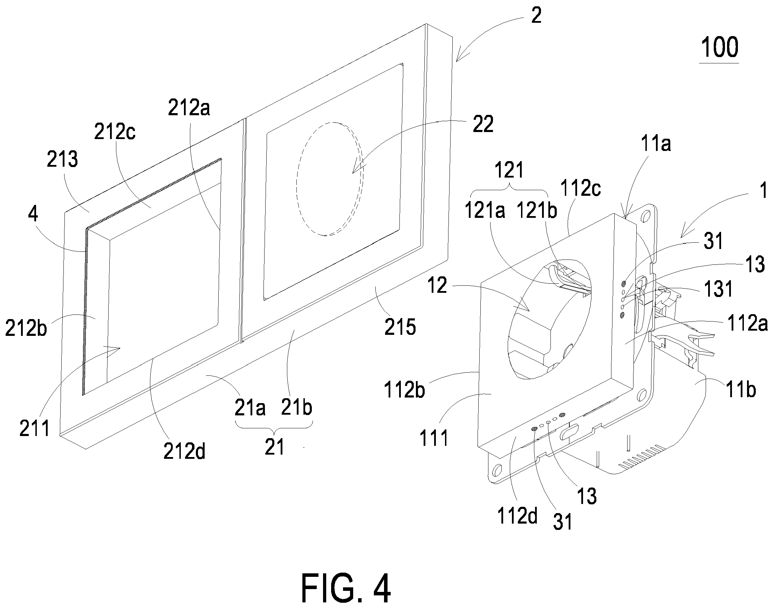

FIG. 1 is a schematic perspective view illustrating a socket assembly mounted on a wall surface according to a first embodiment of the present disclosure, FIG. 2 is a schematic perspective view illustrating the socket assembly in a first state according to the first embodiment of the present disclosure, FIG. 3 is an exploded view illustrating the socket assembly of FIG. 2, and FIG. 4 is another exploded view illustrating the socket assembly of FIG. 2 from another perspective. As shown in FIG. 1 to FIG. 4, in the present embodiment, the socket assembly 100 is for example but not limited to a wall-mounted socket assembly. The wall-mounted socket assembly is partially mounted in a recess (not shown) of a wall surface A, partially exposed from the wall surface A, and configured to charge at least one electronic device (not shown). The socket assembly 100 includes a socket 1 and a power supply expansion component 2. The socket 1 is electrically coupled with a power source (not shown), and pluggably and detachably connected to a plug of the electronic device (not shown), so as to provide electric energy to the electronic device through a transmission path of the socket 1 and the plug. The socket 1 includes a first housing 11, a first power transmission unit 12 and at least one first terminal group 13. The first housing 11 includes a first part 11a and a second part 11b. The first part 11a is in connection with the second part 11b, and includes a first top surface 111 and at least one side surface 112. The at least one side surface 112 is in connection with a periphery of the first top surface 111. The first power transmission unit 12 is disposed in the first housing 11, electrically coupled with the power source, and configured to pluggably connect with the plug of the electronic device. The at least one first terminal group 13 is disposed on the at least one side surface 112, and is electrically coupled with the power source. In an embodiment, the first terminal group 13 is electrically coupled with the power source by a cable (not shown) disposed inside the first housing 11 of the socket 1, but not limited thereto. The power supply expansion component 2 includes a second housing 21, at least one second power transmission unit 22 and at least one second terminal group 23. The second housing 21 includes a hollow portion 211. Sidewalls surrounding the hollow portion 211 have at least one inner surface 212. The first part 11a of the first housing 11 of the socket 1 is matched with the hollow portion 211 of the second housing 21. The hollow portion 211 of the second housing 21 is detachably assembled to the first part 11a of the first housing 11 of the socket 1. The at least one second terminal group 23 is disposed on the at least one inner surface 212 of the second housing 21. The at least one second power transmission unit 22 is disposed in the second housing 21, and electrically coupled with the at least one second terminal group 23. Preferably but not exclusively, the at least one second power transmission unit 22 is disposed in an accommodation space inside the second housing 21, wherein the at least one second power transmission unit 22 shown in FIG. 1 to FIG. 4 and FIG. 6 to FIG. 8 is presented in perspective. When the first part 11a of the first housing 11 of the socket 1 is matched and assembled with the hollow portion 211 of the second housing 21, and the at least one first terminal group 13 of the socket 1 and the at least one second terminal group 23 of the power supply expansion component 2 are contacted to establish electrical conduction, the power source supplies electric energy to the at least one second power transmission unit 22 through a transmission path formed by the at least one first terminal group 13 and the at least one second terminal group 23. Consequently, the second power transmission unit 22 can charge the electronic device through wireless or wired power transmission. In the present embodiment, the socket assembly 100 includes the first power transmission unit 12 for pluggably connecting to the plug, and further includes the expanded second power transmission unit 22, so that the number of power transmission units is increased. Since the first housing 11 and the second housing 21 are detachably assembled with each other, and the socket 1 and the power supply expansion component 2 are structurally connected to and electrically coupled with each other, electric energy received by the socket 1 can be provided to the second power transmission unit 22 of the power supply expansion component 2 through the transmission path formed by the first terminal group 13 and the second terminal group 23. Consequently, the advantages of enhancing expansion convenience, facilitating quick assembly, and saving space are achieved.

Please refer to FIG. 2 and FIG. 3. In the present embodiment, the socket 1 is a socket that complies with European standards and can be detachably connected to a plug which meets European standards, but is not limited thereto. In an embodiment, the first part 11a of the first housing 11 includes an extension part 113 and at least one fixing opening 114. The extension part 113 is outwardly extended from the at least one side surface 112 of the first housing 11, and surrounds the first part 11a of the first housing 11. Each fixing opening 114 is disposed on the extension part 113, and corresponded to an opening (not shown) disposed on the wall surface A. At least one fixing element (not shown) penetrates through the corresponding fixing opening 114, and is fixed to the corresponding opening on the wall surface A, so that the first housing 11 is fixed on the wall surface A, but not limited thereto. When the hollow portion 211 of the second housing 21 is matched and assembled with the first part 11a of the first housing 11 of the socket 1, the second housing 21 moves along a direction toward the extension part 113 until the second housing 21 abuts against the extension part 113, and the at least one first terminal group 13 and the at least one second terminal group 23 are contacted to establish electrical conduction, as shown in FIG. 2. Consequently, the assembly of the socket assembly 100 is achieved.

In some embodiments, the cross-sectional profile of the first part 11a of the first housing 11 is square, rectangular, circular, elliptical, polygonal, or irregular, but not limited thereto. The cross-sectional profile of the hollow portion 211 of the second housing 21 is square, rectangular, circular, elliptical, polygonal, or irregular, but not limited thereto. The cross-sectional profile of the hollow portion 211 of the second housing 21 matches the cross-sectional profile of the first part 11a of the first housing 11, which allows for a tight-fitting engagement between the first part 11a of the first housing 11 and the hollow portion 211 of the second housing 21.

In an embodiment, the cross-sectional profile of the first part 11a of the first housing 11 is rectangular. Preferably but not exclusively, the cross-sectional profile of the first part 11a of the first housing 11 is a square. The cross-sectional profile of the hollow portion 211 of the second housing 21 is rectangular. Preferably but not exclusively, the cross-sectional profile of the hollow portion 211 of the second housing 21 is a square and matches the first part 11a of the first housing 11. The second part 11b of the first housing 11 is configured to be embedded in the recess (not shown) of the wall surface A and electrically coupled with the power source. Please refer to FIG. 3 and FIG. 4 again, the at least one side surface 112 of the first part 11a of the first housing 11 includes a first side surface 112a, a second side surface 112b, a third side surface 112c and a fourth side surface 112d. The first side surface 112a and the second side surface 112b are disposed on two opposite sides of the first part 11a, and are in connection between the third side surface 112c and the fourth side surface 112d, respectively. The third side surface 112c and the fourth side surface 112d are disposed on two opposite sides of the first part 11a, and are in connection between the first side surface 112a and the second side surface 112b, respectively. The at least one inner surface 212 of the second housing 21 includes a first inner surface 212a, a second inner surface 212b, a third inner surface 212c and a fourth inner surface 212d. The first inner surface 212a and the second inner surface 212b are disposed on two opposite sides of the hollow portion 211, and are in connection between the third inner surface 212c and the fourth inner surface 212d, respectively. The third inner surface 212c and the fourth inner surface 212d are disposed on two opposite sides of the hollow portion 211, and are in connection between the first inner surface 212a and the second inner surface 212b, respectively.

In an embodiment, the first power transmission unit 12 includes a plurality of conductive terminals 120. The plurality of conductive terminals 120 are disposed on the first housing 11. At least a part of each conductive terminal 120 of the first power transmission unit 12 is exposed from a bottom surface of a recess of the first part 11a of the first housing 11, and configured to contact with a corresponding one of terminals of the plug of the electronic device to establish electrical conduction. The remaining portion of each conductive terminal 120 of the first power transmission unit 12 is embedded in the second part 11b of the first housing 11, and an end of the conductive terminal 120 is electrically coupled with the power source. Consequently, electric energy received by the socket 1 can be provided to the electronic device through the transmission path formed by the plurality of conductive terminals 120 and the terminals of the plug of the electronic device. Consequently, the transmission of electric energy is achieved.

Please refer to FIG. 4. In the present embodiment, the first power transmission unit 12 includes at least one latching component 121. The at least one latching component 121 is disposed on a sidewall of the recess of the first part 11a of the first housing 11, and configured to elastically clamp or latch onto the plug of the electronic device. Each of the latching component 121 includes a first segment 121a and a second segment 121b. The first segment 121a of each latching component 121 is exposed in the recess of the first part 11a. The second segment 121b of each latching component 121 is embedded in the second part 11b of the first housing 11. When the plug of the electronic device is plugged into the recess of the first part 11a of the first housing 11, the at least one latching component 121 elastically clamps or latches onto the plug of the electronic device. Consequently, the advantages of fixing the plug and preventing the plug from detaching are achieved.

Please refer to FIG. 2 and FIG. 3. In the present embodiment, the at least one first terminal group 13 includes a plurality of first terminals 131. The plurality of first terminals 131 are metal conductors and are embedded in the first housing 11. An end of each of the first terminals 131 is exposed to the at least one side surface 112 of the first part 11a of the first housing 11, and the other end of each of the first terminals 131 is electrically coupled with the power source. The at least one second terminal group 23 includes a plurality of second terminals 231. The plurality of second terminals 231 are metal conductors and are embedded in the second housing 21. An end of each of the second terminal 231 is exposed to the at least one inner surface 212 of the second housing 21, and the other end of each of the second terminals 231 is electrically coupled with the second power transmission unit 22. By detachably assembling the first housing 11 with the second housing 21, the plurality of first terminals 131 of the at least one first terminal group 13 of the first housing 11 are in connection with the plurality of second terminals 231 of the corresponding second terminal group 23 of the power supply expansion component 2 to establish electrical conduction, respectively. Consequently, the electric energy received by the socket 1 can be provided to the second power transmission unit 22 of the power supply expansion component 2 through the transmission path formed by the plurality of first terminals 131 of the first terminal group 13 and the plurality of second terminals 231 of the second terminal group 23, and the second power transmission unit 22 can charge the electronic device through wired or wireless power transmission. Therefore, the advantages of enhancing expansion convenience, facilitating quick assembly, and saving space are achieved.

Please refer to FIG. 2 to FIG. 4. In the present embodiment, the second housing 21 includes a first housing block 21a and a second housing block 21b. The first housing block 21a and the second housing block 21b are in connection with each other, and the first housing block 21a and the second housing block 21b are integrally formed into one piece structure, but not limited thereto. A hollow portion 211 is formed on the first housing block 21a. The second power transmission unit 22 is disposed in an accommodation space (not shown) inside the second housing block 21b. The second power transmission unit 22 may be a wireless power transmission unit. Due to the arrangement of the second power transmission unit 22, the electronic device with wireless charging capability can be placed on the surface of the second housing block 21b, for example, via magnetic attachment, and disposed corresponding to the second power transmission unit 22. Consequently, the electronic device with wireless charging capability is charged by the second power transmission unit 22 in wireless charging manner. In some embodiments, the second power transmission unit 22 is one of a European standard socket, a Taiwan standard socket, other national standard sockets, a USB A-Type connector, a USB C-Type connector, a cigarette lighter socket, or other types of power transmission units.

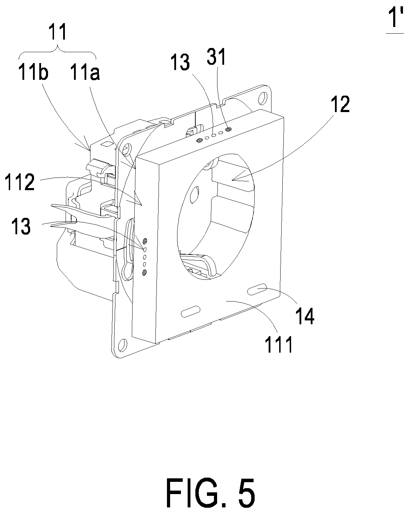

FIG. 5 is a schematic perspective view illustrating a socket of a socket assembly according to a variant embodiment of the present disclosure. Please refer to FIG. 5. In this variant embodiment, the structure of the socket 1' of the socket assembly is similar to the structure of the socket 1 of the socket assembly of the first embodiment shown in FIG. 1 to FIG. 4, wherein the same reference numerals represent the same structures and functions, and detailed descriptions are not repeated herein. Different from the socket 1 of the first embodiment, the socket 1' includes at least one third power transmission unit 14. The at least one third power transmission unit 14 is disposed on the first housing 11, and is electrically coupled with the power source. The at least one third power transmission unit 14 includes a slot. The slot is disposed on the first top surface 111 and apart from the first power transmission unit 12. In an embodiment, the at least one third power transmission unit 14 may be a USB C-Type connector. The third power transmission unit 14 includes at least one conductive terminal. An end of each conductive terminal is exposed to the slot disposed on the first top surface 111, and the other end of each conductive terminal is electrically coupled with the power source, so as to form a power transmission path. Due to the arrangement of the third power transmission unit 14, the expansion of the power transmission unit is achieved, and the advantage of enhancing convenience is also achieved.

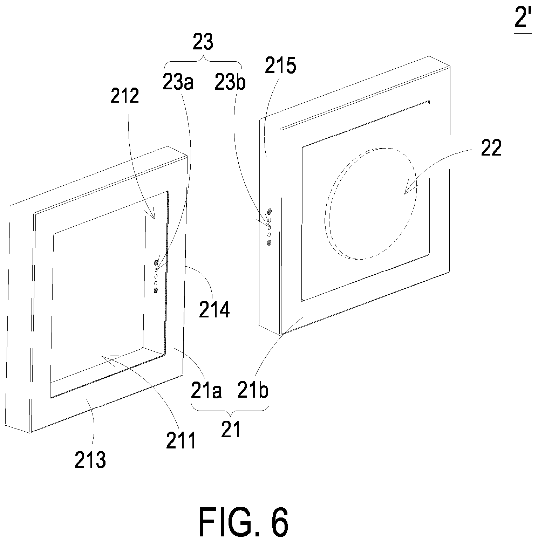

FIG. 6 is an exploded view illustrating a power supply expansion component of a socket assembly according to a variant embodiment of the present disclosure. Please refer to FIG. 6. In this variant embodiment, the structure of the socket assembly is similar to the structure of the socket assembly of the first embodiment shown in FIG. 1 to FIG. 4, wherein the same reference numerals represent the same structures and functions, and detailed descriptions are not repeated herein. Different from the power supply expansion component 2 of the first embodiment, the first housing block 21a and the second housing block 21b of the second housing 21 of the power supply expansion component 2' are detachably connected to each other. The hollow portion 211 is disposed on the first housing block 21a. The second power transmission unit 22 is disposed in the accommodation space (not shown) inside the second housing block 21b. In the present embodiment, the second terminal group 23 further includes a first housing block terminal group 23a and a second housing block terminal group 23b. The first housing block terminal group 23a is embedded in a sidewall of the first housing block 21a. An end of each terminal of the first housing block terminal group 23a is exposed to the at least one inner surface 212, and the other end of each terminal of the first housing block terminal group 23a is exposed to the at least one first outer surface 214 of the first housing block 21a, wherein the at least one inner surface 212 and the at least one first outer surface 214 are two opposite surfaces. The second housing block terminal group 23b is embedded in the second housing block 21b. An end of each terminal of the second housing block terminal group 23b is exposed to the at least one second outer surface 215 of the second housing block 21b, and the other end of each terminal of the second housing block terminal group 23b is electrically coupled with the second power transmission unit 22. By assembling the second housing block 21b with the first housing block 21a, the at least one first outer surface 214 of the first housing block 21a is in contact with the at least one second outer surface 215 of the second housing block 21b, and the plurality of terminals of the first housing block terminal group 23a are in contact with the plurality of terminals of the second housing block terminal group 23b to establish electrical conduction, respectively. Consequently, a power transmission path is formed. By detachably assembling the second housing block 21b of the power supply expansion component 2' with the first housing block 21a, the second housing block 21b and the second power transmission unit 22 disposed in the second housing block 21b can be assembled to the first housing block 21a according to practical requirements, thereby achieving the diversity and convenience of expanding the power transmission units. In an embodiment, the first housing block 21a and the second housing block 21b may be assembled by snap-fit mechanisms or magnetic attachment, etc., but are not limited thereto.

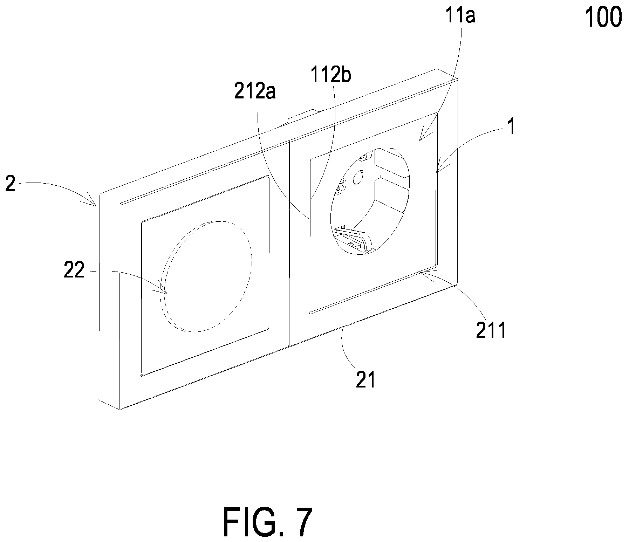

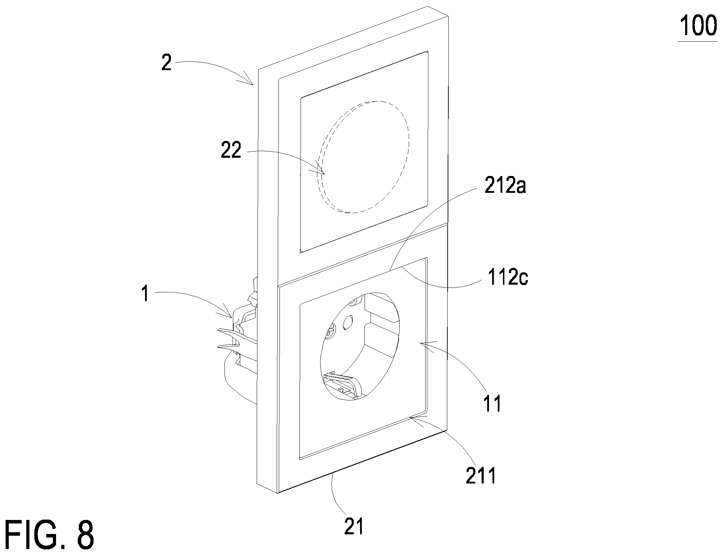

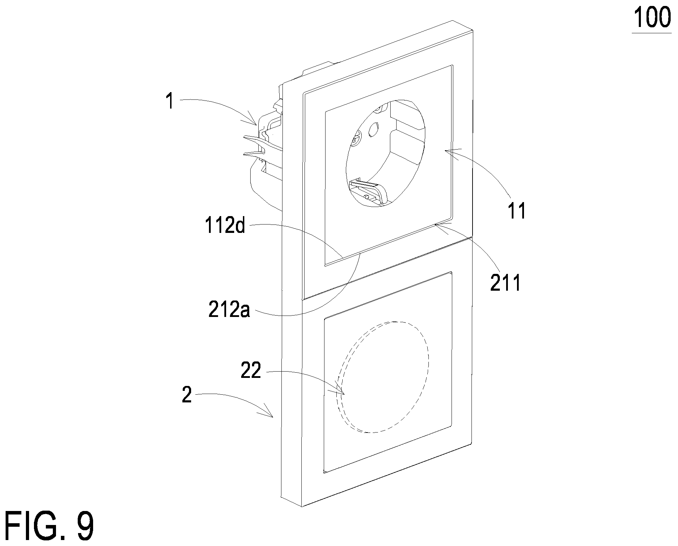

FIG. 7 is a schematic perspective view illustrating the socket assembly of FIG. 2 in a second state, FIG. 8 is a schematic perspective view illustrating the socket assembly of FIG. 2 in a third state, and FIG. 9 is a schematic perspective view illustrating the socket assembly of FIG. 2 in a fourth state. Please refer to FIG. 1 to FIG. 3 and FIG. 7 to FIG. 9. In the present embodiment, the socket 1 includes four first terminal groups 13. The four first terminal groups 13 are disposed on the first side surface 112a, the second side surface 112b, the third side surface 112c and the fourth side surface 112d of the first housing 11. The power supply expansion component 2 includes one second terminal group 23. The second terminal group 23 is disposed on the first inner surface 212a. The second power transmission unit 22 is disposed corresponding to a side of the first inner surface 212a. The power supply expansion component 2 can be switched between a first state, a second state, a third state and a fourth state. When the first part 11a of the first housing 11 is assembled to match the hollow portion 211 of the second housing 21, the first inner surface 212a is in contact with the first side surface 112a, the second terminal group 23 is in contact with the first terminal group 13 disposed on the first side surface 112a to establish electrical conduction, and the second power transmission unit 22 is disposed corresponding to the first side surface 112a. Consequently, the first state is formed, as shown in FIG. 2. When the first part 11a of the first housing 11 is assembled to match the hollow portion 211 of the second housing 21, the first inner surface 212a is in contact with the second side surface 112b, the second terminal group 23 is in contact with the first terminal group 13 disposed on the second side surface 112b to establish electrical conduction, and the second power transmission unit 22 is disposed corresponding to the second side surface 112b. Consequently, the second state is formed, as shown in FIG. 7. When the first part 11a of the first housing 11 is assembled to match the hollow portion 211 of the second housing 21, the first inner surface 212a is in contact with the third side surface 112c, the second terminal group 23 is in contact with the first terminal group 13 disposed on the third side surface 112c to establish electrical conduction, and the second power transmission unit 22 is disposed corresponding to the third side surface 112c. Consequently, the third state is formed, as shown in FIG. 8. When the first part 11a of the first housing 11 is assembled to match the hollow portion 211 of the second housing 21, the first inner surface 212a is in contact with the fourth side surface 112d, the second terminal group 23 is in contact with the first terminal group 13 disposed on the fourth side surface 112 to establish electrical conduction, and the second power transmission unit 22 is disposed corresponding to the fourth side surface 112. Consequently, the fourth state is formed, as shown in FIG. 9. The connection configuration between the power supply expansion component 2 and the socket 1 can be switched among the first state, the second state, the third state and the fourth state, which allows the second power transmission unit 22 of the power supply expansion component 2 to be adjusted to the required position according to practical requirements. Consequently, the convenience is enhanced. It is noted that the second terminal group 23 is not limited to be disposed on the first inner surface 212a, but can also be disposed on one of the second inner surface 212b, the third inner surface 212c and the fourth inner surface 212d according to the practical requirements.

In some embodiments, the socket 1 includes one first terminal group 13, and the first terminal group 13 is disposed on one of the first side surface 112a, the second side surface 112b, the third side surface 112c and the fourth side surface 112d of the side surface 112. The power supply expansion component 2 includes four second terminal groups 23. The second terminal groups 23 are disposed on the first inner surface 212a, the second inner surface 212b, the third inner surface 212c and the fourth inner surface 212d, respectively. The second power transmission unit 22 is disposed corresponding to a side of the hollow portion 211. When the first part 11a of the first housing 11 is assembled to match the hollow portion 211 of the second housing 21, the first terminal group 13 is in contact with one of the four second terminal groups 23 to establish electrical conduction, so as to form the power transmission path. In other words, the connection configuration between the power supply expansion component 2 and the socket 1 can be switched according to practical requirements, which allows the second power transmission unit 22 to be adjusted to the required position. Consequently, the convenience is enhanced. It is noted that the quantity and installation positions of the first terminal group 13 and the second terminal group 23 are not limited to the above-mentioned embodiments and can be adjusted according to practical requirements.

Please refer to FIG. 1 to FIG. 3. In the present embodiment, the socket assembly 100 includes a fixing component 3. The fixing component 3 is disposed on at least one of the first housing 11 of the socket 1 and the second housing 21 of the power supply expansion component 2, and configured to allow the second housing 21 to be detachably fixed to the first housing 11. The fixing component 3 allows the second housing 21 to be detachably fixed to the first housing 11 by snap-fit, interference fit, magnetic attachment, or other fixing methods, but not limited thereto.

Please refer to FIG. 1 to FIG. 3. In the present embodiment, the fixing component 3 allows the second housing 21 to be detachably fixed to the first housing 11 by magnetic attachment. The fixing component 3 includes at least one first magnetic element 31 and at least one second magnetic element 32. The at least one first magnetic element 31 is disposed on the at least one side surface 112 of the first housing 11 of the socket 1. The at least one second magnetic element 32 is disposed on the at least one inner surface 212 of the second housing 21 of the power supply expansion component 2. The at least one second magnetic element 32 is configured to detachably and magnetically attach to the at least one first magnetic element 31, so that the second housing 21 is detachably fixed to the first housing 11. By the arrangement of the first magnetic element 31 and the second magnetic element 32, the second housing 21 of the power expansion module 2 can be easily attached to and detached from the first housing 11 of the socket 1. Consequently, the convenience is enhanced and the risk of poor contact is reduced.

Please refer to FIG. 1 to FIG. 9. In the present embodiment, the fixing component 3 includes four first magnetic elements 31 and one second magnetic element 32. The first magnetic elements 31 are disposed on the first side surface 112a, the second side surface 112b, the third side surface 112c and the fourth side surface 112d of the side surface 112, respectively. The second magnetic element 32 is disposed on the first inner surface 212a. When the first housing 11 is assembled to match the hollow portion 211 of the second housing 21, the first inner surface 212a is in contact with the first side surface 112a, and the second magnetic element 32 is magnetically attached to the first magnetic element 31 disposed on the first side surface 112a. Consequently, the first state is formed, as shown in FIG. 2. When the first housing 11 is assembled to match the hollow portion 211 of the second housing 21, the first inner surface 212a is in contact with the second side surface 112b, and the second magnetic element 32 is magnetically attached to the first magnetic element 31 disposed on the second side surface 112b. Consequently, the second state is formed, as shown in FIG. 7. When the first housing 11 is assembled to match the hollow portion 211 of the second housing 21, the first inner surface 212a is in contact with the third side surface 112c, and the second magnetic element 32 is magnetically attached to the first magnetic element 31 disposed on the third side surface 112c. Consequently, the third state is formed, as shown in FIG. 8. When the first housing 11 is assembled to match the hollow portion 211 of the second housing 21, the first inner surface 212a is in contact with the fourth side surface 112d, and the second magnetic element 32 is magnetically attached to the first magnetic element 31 disposed on the fourth side surface 112d. Consequently, the fourth state is formed, as shown in FIG. 9. In other words, in the first state, the second state, the third state and the fourth state of the connection configuration between the power supply expansion component 2 and the socket 1, the second magnetic element 32 can be magnetically attached to the corresponding first magnetic element 31 of the socket 1. Consequently, the power supply expansion component 2 is assembled with and detached from the socket 1 easily, and the assembly states between the power supply expansion component 2 and the socket 1 are switched easily. Therefore, the convenience is enhanced, and the risk of poor contact is reduced.

In some embodiments, the socket 1 includes one first magnetic element 31. The first magnetic element 31 is disposed on one of the first side surface 112a, the second side surface 112b, the third side surface 112c and the fourth side surface 112d of the first housing 11. The power supply expansion component 2 includes four second magnetic elements 32. The second magnetic elements 32 are disposed on the first inner surface 212a, the second inner surface 212b, the third inner surface 212c and the fourth inner surface 212d, respectively. When the first housing 11 is assembled to match the hollow portion 211 of the second housing 21, the first magnetic element 31 is magnetically attached to one of the four second magnetic elements 32. In other words, in any one of the connection configuration between the power supply expansion component 2 and the socket 1, the first magnetic element 31 of the first housing 11 can be magnetically attached to the corresponding second magnetic element 32. Consequently, the power supply expansion component 2 is assembled with and detached from the socket 1 easily, and the assembly states between the power supply expansion component 2 and the socket 1 are switched easily. Therefore, the convenience is enhanced, and the risk of poor contact is reduced. It is emphasized that the quantity and installation positions of the first magnetic element 31 and the second magnetic element 32 are not limited to the above-mentioned embodiments and can be adjusted according to practical requirements.

Please refer to FIG. 1 to FIG. 4. In the present embodiment, the socket assembly 100 includes a protection element 4. Preferably but not exclusively, the protection element 4 is made of a waterproof material. The protection element 4 is disposed on at least one of the at least one side surface 112 of the first housing 11 of the socket 1 and the at least one inner surface 212 of the second housing 21 of the power supply expansion component 2, or a combination thereof. When the first part 11a of the first housing 11 is assembled to match the hollow portion 211 of the second housing 21, the protection element 4 covers or is clamped within the gap between the first housing 11 and the second housing 21, which prevents moisture, dust or foreign objects from entering the gap between the first housing 11 and the second housing 21. Consequently, the risks of component rust, short circuits, and poor contact are reduced.

Please refer to FIG. 1 to FIG. 4. In the present embodiment, the first housing block 21a of the second housing 21 of the power supply expansion component 2 includes a second top surface 213. The at least one inner surface 212 is in connection with the periphery of the second top surface 213. Preferably but not exclusively, the protection element 4 is an annular element made of rubber, and is disposed on the at least one inner surface 212 of the second housing 21. The protection element 4 is disposed around the hollow portion 211, and is disposed between the at least one second terminal group 23 and the second top surface 213. When the first part 11a of the first housing 11 is assembled to match the hollow portion 211 of the second housing 21, the protection element 4 is clamped between the at least one side surface 112 of the first housing 11 and the at least one inner surface 212 of the second housing 21, which prevents moisture, dust or foreign objects from entering the gap between the first housing 11 and the second housing 21. Consequently, the risks of component rust, short circuits, and poor contact are reduced.

In an embodiment, the protection element 4 is a waterproof sheet (not shown), and the waterproof sheet is disposed around the hollow portion 211. At least a portion of the waterproof sheet is attached on the second top surface 213 of the second housing 21, and at least a portion of the waterproof sheet is disposed corresponding to the peripheral wall of the hollow portion 211. When the first part 11a of the first housing 11 is assembled to match the hollow portion 211 of the second housing 21, at least a portion of the waterproof sheet is in contact with the first top surface 111 of the first housing 11, and the waterproof sheet covers the gap between the first housing 11 and the second housing 21. Due to the arrangement of the waterproof sheet, moisture, dust or foreign objects are blocked. Consequently, the risks of component rust, short circuits, and poor contact are reduced.

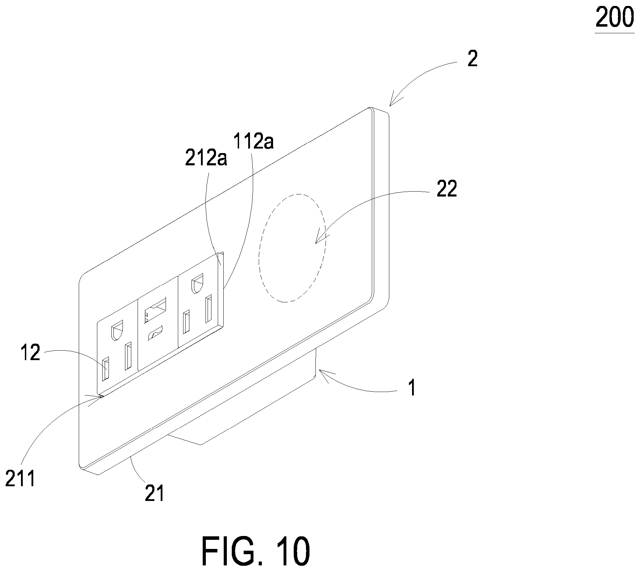

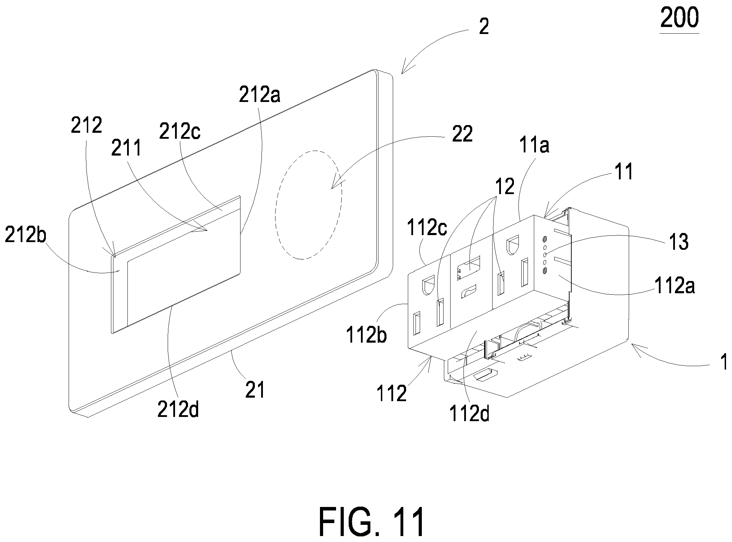

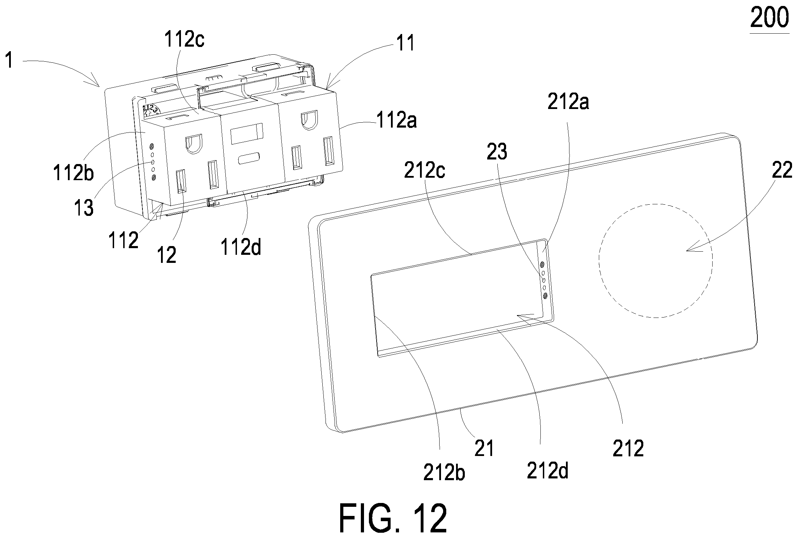

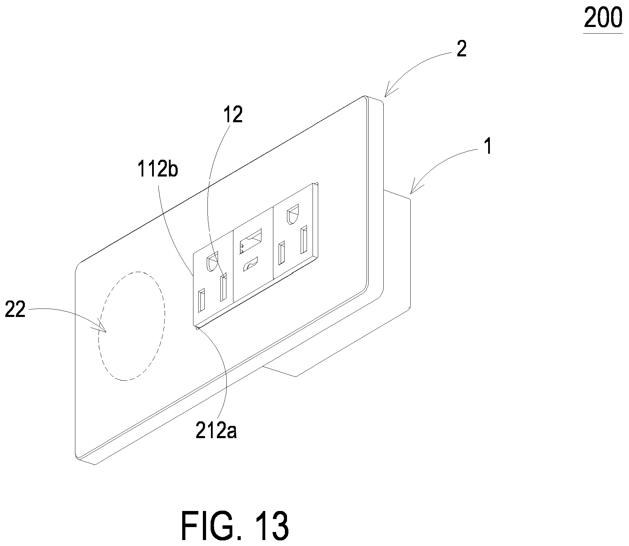

FIG. 10 is a schematic perspective view illustrating a socket assembly in a first state according to the second embodiment of the present disclosure, FIG. 11 is an exploded view illustrating the socket assembly of FIG. 10, FIG. 12 is another exploded view illustrating the socket assembly of FIG. 10 from another perspective, and FIG. 13 is a schematic perspective view illustrating the socket assembly of FIG. 10 in a second state. Please refer to FIG. 10 to FIG. 13. The structure of the socket assembly 200 is similar to the structure of the socket assembly 100 of the first embodiment shown in FIG. 1 to FIG. 4, wherein the same reference numerals represent the same structures and functions, and detailed descriptions are not repeated herein. Different from the socket assembly 100 shown in FIG. 1 to FIG. 4, the socket 1 of the socket assembly 200 of the present embodiment complies with Taiwan standards and can be pluggably connected with a plug which meets Taiwan standards, but is not limited thereto. The cross-sectional profile of the first part 11a of the first housing 11 is rectangular. The cross-sectional profile of the hollow section 211 of the second housing 21 is also rectangular, and matches the first part 11a of the first housing 11. The socket 1 includes two first terminal groups 13. The two first terminal groups 13 are disposed on the first side surface 112a and the second side surface 112b of the first part 11a of the first housing 11, respectively. The power supply expansion component 2 includes one second terminal group 23. The second terminal group 23 is disposed on the first inner surface 212a. The second power transmission unit 22 is disposed corresponding to a side of the first inner surface 212a. The connection configuration between the power supply expansion component 2 and the socket 1 can be switched between a first state and a second state. When the first part 11a of the first housing 11 is assembled to match the hollow portion 211 of the second housing 21, the first inner surface 212a is in contact with the first side surface 112a, the second terminal group 23 is in contact with the first terminal group 13 disposed on the first side surface 112a to establish electrical conduction, and the second power transmission unit 22 is disposed corresponding to the first side surface 112a. Consequently, the first state is formed, as shown in FIG. 10. When the first part 11a of the first housing 11 is assembled to match the hollow portion 211 of the second housing 21, the first inner surface 212a is in contact with the second side surface 112b, the second terminal group 23 is in contact with the first terminal group 13 disposed on the second side surface 112b to establish electrical conduction, and the second power transmission unit 22 is disposed corresponding to the second side surface 112b. Consequently, the second state is formed, as shown in FIG. 13. The connection configuration between the power supply expansion component 2 and the socket 1 can be switched between the first state and the second state, which allows the second power transmission unit 22 of the power supply expansion component 2 to be adjusted to the required position according to practical requirements. Consequently, the convenience is enhanced.

In some embodiments, the socket 1 of the socket assembly 200 includes one first terminal group 13, and the first terminal group 13 is disposed on one of the first side surface 112a and the second side surface 112b of the first housing 11. The power supply expansion component 2 includes two second terminal groups 23, and the two second terminal groups 23 are disposed on the first inner surface 212a and the second inner surface 212b, respectively. The second power transmission unit 22 is disposed corresponding to a side of the hollow portion 211. When the first part 11a of the first housing 11 is assembled to match the hollow portion 211 of the second housing 21, the first inner surface 212a is in contact with the second side surface 112b, the first terminal group 13 is in contact with one of the two second terminal groups 23 to establish electrical conduction. In other words, the connection configuration between the power supply expansion component 2 and the socket 1 can be adjusted to the required position according to practical requirements. Consequently, the convenience is enhanced. It is noted that the quantity and installation positions of the first terminal group 13 and the second terminal group 23 are not limited to the above-mentioned embodiments and can be adjusted according to practical requirements.

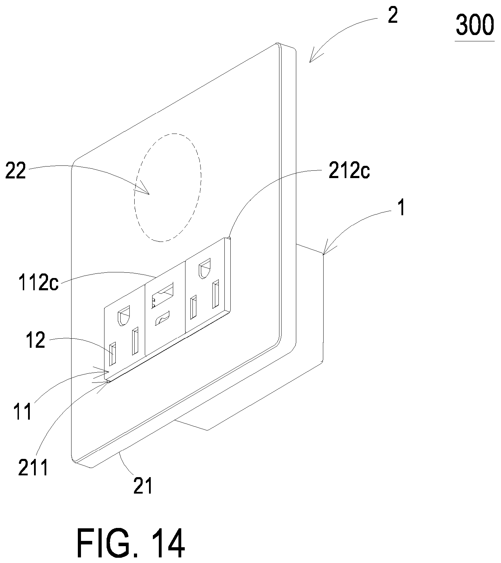

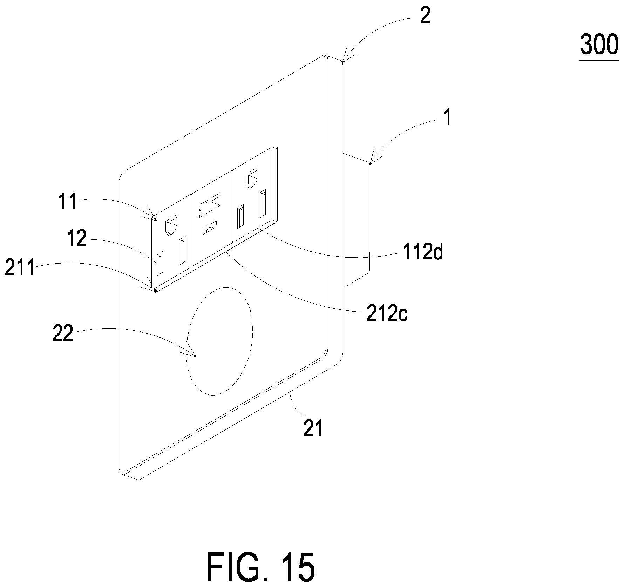

FIG. 14 is a schematic perspective view illustrating a socket assembly in a third state according to the third embodiment of the present disclosure, and FIG. 15 is a schematic perspective view illustrating the socket assembly of FIG. 14 in a fourth state. Please refer to FIG. 14 and FIG. 15 with reference to FIG. 10 to FIG. 13. The structure of the socket assembly 300 of the present embodiment is similar to the structure of the socket assembly 200 shown in FIG. 10 to FIG. 13, wherein the same reference numerals represent the same structures and functions, and detailed descriptions are not repeated herein. Different from the socket assembly 200 shown in FIG. 10 to FIG. 13, the socket 1 of the socket assembly 300 of the present embodiment includes two first terminal groups (not shown). The two first terminal groups are disposed on the third side surface 112c and the fourth side surface 112d of the first housing 11, respectively. The power supply expansion component 2 includes one second terminal group (not shown). The second terminal group is disposed on the third inner surface 212c. The second power transmission unit 22 is disposed corresponding to the third inner surface 212c. The connection configuration between the power supply expansion component 2 and the socket 1 can be switched between a third state and a fourth state. When the first part 11a of the first housing 11 is assembled to match the hollow portion 211 of the second housing 21, the third inner surface 212c is in contact with the third side surface 112c, the second terminal group disposed on the third inner surface 212c is in contact with the first terminal group disposed on the third side surface 112c to establish electrical conduction, and the second power transmission unit 22 is disposed corresponding to the third side surface 112c. Consequently, the third state is formed, as shown in FIG. 14. When the first part 11a of the first housing 11 is assembled to match the hollow portion 211 of the second housing 21, the third inner surface 212c is in contact with the fourth side surface 112d, the second terminal group disposed on the third inner surface 212c is in contact with the first terminal group disposed on the fourth side surface 112d to establish electrical conduction, and the second power transmission unit 22 is disposed corresponding to the fourth side surface 112d. Consequently, the fourth state is formed, as shown in FIG. 15. The connection configuration between the power supply expansion component 2 and the socket 1 can be switched between the third state and the fourth state, which allows the second power transmission unit 22 of the power supply expansion component 2 to be adjusted to the required position according to practical requirements. Consequently, the convenience is enhanced.

It is noted that the first power transmission unit 12 is not limited to the above-mentioned embodiments of sockets conforming to European or Taiwan specifications, and can be adjusted according to practical requirements.

From above descriptions, the present disclosure provides a socket assembly. By assembling the first housing and the second housing together, the first terminal group is electrically connected to the second terminal group 23 rapidly, and the advantages of expanding the power transmission unit, enhancing convenience, and saving space are achieved. The assembly configuration between the power expansion component and the socket can be adjusted among multiple states, which allows the second power transmission unit to be adjusted to the required position. Consequently, the convenience is enhanced. Additionally, by the arrangement of the fixing component, the power supply expansion component is assembled with and detached from the socket easily, and the assembly states between the power supply expansion component and the socket are switched easily. Consequently, the convenience is enhanced and the risk of poor contact is reduced. Moreover, Due to the arrangement of the protection element, moisture, dust or foreign objects are blocked. Consequently, the risks of component rust, short circuits, and poor contact are reduced.

## Claims

1. A socket assembly (100, 200, 300), **characterized by** comprising:
a socket (1) configured to provide electric energy from a power source to an electronic device through a transmission path of the socket (1) and a plug, wherein the socket (1) comprises:
a first housing (11) comprising a first part (11a) and a second part (11b), wherein the first part (11a) is in connection with the second part (11b), and comprises a first top surface (111) and at least one side surface (112), wherein the at least one side surface (112) is in connection with a periphery of the first top surface (111);
a first power transmission unit (12) disposed in the first housing (11), electrically coupled with the power source, and configured to detachably connect to the plug of the electronic device; and
at least one first terminal group (13) disposed on the at least one side surface (112), and electrically coupled with the power source; and a power supply expansion component (2) comprising:
a second housing (21) comprising a hollow portion (211), and sidewalls surrounding the hollow portion (211) having at least one inner surface (212), wherein the first part (11a) of the first housing (11) is matched with and detachably assembled to the hollow portion (211);
at least one second terminal group (23) disposed on the at least one inner surface (212); and
at least one second power transmission unit (22) disposed in the second housing (21), and electrically coupled with the at least one second terminal group (23),
wherein the first part (11a) of the first housing (11) of the socket (1) is matched and assembled with the hollow portion (211) of the second housing (21), the at least one first terminal group (13) and the at least one second terminal group (23) are contacted to establish electrical conduction, and the power source supplies electric energy to the at least one second power transmission unit (22) through the transmission path formed by the at least one first terminal group (13) and the at least one second terminal group (23).

2. The socket assembly (100, 200, 300) according to claim 1, wherein the cross-sectional profile of the first part (11a) of the first housing (11) is square, rectangular, circular, elliptical, polygonal, or irregular, wherein the cross-sectional profile of the hollow portion (211) of the second housing (21) is square, rectangular, circular, elliptical, polygonal, or irregular, wherein the cross-sectional profile of the hollow portion (211) of the second housing (21) matches the cross-sectional profile of the first part (11a) of the first housing (11), so that the first part (11a) of the first housing (11) is assembled with the hollow portion (211) of the second housing (21).

3. The socket assembly (100, 200, 300) according to claim 1, wherein the at least one first terminal group (13) comprises a plurality of first terminals (131), wherein the plurality of first terminals (131) are embedded in the first housing (11), an end of each of the first terminals (131) is exposed to the at least one side surface (112), and the other end of each of the first terminals (131) is electrically coupled with the power source, wherein the at least one second terminal group (23) comprises a plurality of second terminals (231), the plurality of second terminals (231) are embedded in the second housing (21), an end of each of the second terminals (231) is exposed to the at least one inner surface (212), and the other end of each of the second terminals (231) is electrically coupled with the second power transmission unit (22), wherein the first housing (11) is detachably assembled with the second housing (21), the plurality of first terminals (131) of the at least one first terminal group (13) are in connection with the plurality of second terminals (231) of the corresponding second terminal group (23) to establish electrical conduction, respectively, so that the electric energy received by the socket (1) is provided to the second power transmission unit (22) through the transmission path formed by the plurality of first terminals (131) of the first terminal group (13) and the plurality of second terminals (231) of the second terminal group (23).

4. The socket assembly (100, 200, 300) according to claim 1, wherein the second housing (21) comprises a first housing block (21a) and a second housing block (21b), wherein the first housing block (21a) and the second housing block (21b) are in connection with each other, and the first housing block (21a) and the second housing block (21b) are integrally formed into one piece structure, wherein the hollow portion (211) is formed on the first housing block (21a), and the second power transmission unit (22) is disposed inside the second housing block (21b).

5. The socket assembly (100, 200, 300) according to claim 1, wherein the second housing (21) comprises a first housing block (21a) and a second housing block (21b), wherein the first housing block (21a) and the second housing block (21b) are detachably connected with each other, wherein the hollow portion (211) is formed on the first housing block (21a), and the second power transmission unit (22) is disposed inside the second housing block (21b).

6. The socket assembly (100, 200, 300) according to claim 5, wherein the at least one second terminal group (23) comprises a first housing block terminal group (23a) and a second housing block terminal group (23b), wherein the first housing block terminal group (23a) is embedded in a sidewall of the first housing block (21a), an end of each terminal of the first housing block terminal group (23a) is exposed to the at least one inner surface (212), and the other end of each terminal of the first housing block terminal group (23a) is exposed to at least one first outer surface (214) of the first housing block (21a), wherein the at least one inner surface (212) and the at least one first outer surface (214) are two opposite surfaces, wherein the second housing block terminal group (23b) is embedded in the second housing block (21b), an end of each terminal of the second housing block terminal group (23b) is exposed to at least one second outer surface (215) of the second housing block (21b), and the other end of each terminal of the second housing block terminal group (23b) is electrically coupled with the second power transmission unit (22), wherein the second housing block (21b) is assembled with the first housing block (21a), the at least one first outer surface (214) of the first housing block (21a) is in contact with the at least one second outer surface (215) of the second housing block (21b), and the plurality of terminals of the first housing block terminal group (23a) are in contact with the plurality of terminals of the second housing block terminal group (23b) to establish electrical conduction, respectively, so as to form the transmission path.

7. The socket assembly (100, 200, 300) according to claim 1, wherein the cross-sectional profile of the first part (11a) of the first housing (11) is rectangular, wherein the cross-sectional profile of the hollow section (211) of the second housing (21) is rectangular, and matches the first part (11a) of the first housing (11), wherein the at least one side surface (112) of the first part (11a) of the first housing (11) comprises a first side surface (112a), a second side surface (112b), a third side surface (112c) and a fourth side surface (112d), the first side surface (112a) and the second side surface (112b) are disposed on two opposite sides of the first part (11a), and are in connection between the third side surface (112c) and the fourth side surface (112d), respectively, wherein the third side surface (112c) and the fourth side surface (112d) are disposed on two opposite sides of the first part (11a), and are in connection between the first side surface (112a) and the second side surface (112b), respectively, wherein the at least one inner surface (212) of the second housing (21) comprises a first inner surface (212a), a second inner surface (212b), a third inner surface (212c) and a fourth inner surface (212d), wherein the first inner surface (212a) and the second inner surface (212b) are disposed on two opposite sides of the hollow portion (211), and are in connection between the third inner surface (212c) and the fourth inner surface (212d), respectively, wherein the third inner surface (212c) and the fourth inner surface (212d) are disposed on two opposite sides of the hollow portion (211), and are in connection between the first inner surface (212a) and the second inner surface (212b), respectively.

8. The socket assembly (100, 200, 300) according to claim 7, wherein the at least one first terminal group (13) comprises two first terminal groups (13), wherein the two first terminal groups (13) are disposed on the first side surface (112a) and the second side surface (112b) of the first housing (11), respectively, wherein the at least one second terminal group (23) comprises one second terminal group (23), the second terminal group (23) is disposed on the first inner surface (212a), wherein the second power transmission unit (22) is disposed corresponding to the first inner surface (212a), wherein a connection configuration between the power supply expansion component (2) and the socket (1) is switched between a first state and a second state, wherein the first part (11a) of the first housing (11) is assembled to match the hollow portion (211) of the second housing (21), the first inner surface (212a) is in contact with the first side surface (112a), the second terminal group (23) is in contact with the first terminal group (13) disposed on the first side surface (112a) to establish electrical conduction, and the second power transmission unit (22) is disposed corresponding to the first side surface (112a), so as to form the first state, wherein the first part (11a) of the first housing (11) is assembled to match the hollow portion (211) of the second housing (21), the first inner surface (212a) is in contact with the second side surface (112b), the second terminal group (23) is in contact with the first terminal group (13) disposed on the second side surface (112b) to establish electrical conduction, and the second power transmission unit (22) is disposed corresponding to the second side surface (112b), so as to form the second state.

9. The socket assembly (100, 200, 300) according to claim 7, wherein the at least one first terminal group (13) comprises two first terminal groups (13), wherein the two first terminal groups (13) are disposed on the third side surface (112c) and the fourth side surface (112d) of the first housing (11), respectively, wherein the at least one second terminal group (23) comprises one second terminal group (23), and the second terminal group (23) is disposed on the third inner surface (212c), wherein the second power transmission unit (22) is disposed corresponding to the third inner surface (212c), wherein a connection configuration between the power supply expansion component (2) and the socket (1) is switched between a third state and a fourth state, wherein the first part (11a) of the first housing (11) is assembled to match the hollow portion (211) of the second housing (21), the third inner surface (212c) is in contact with the third side surface (112c), the second terminal group (23) disposed on the third inner surface (212c) is in contact with the first terminal group (13) disposed on the third side surface (112c) to establish electrical conduction, and the second power transmission unit (22) is disposed corresponding to the third side surface (112c), so as to form the third state, wherein the first part (11a) of the first housing (11) is assembled to match the hollow portion (211) of the second housing (21), the third inner surface (212c) is in contact with the fourth side surface (112d), the second terminal group (23) disposed on the third inner surface (212c) is in contact with the first terminal group (13) disposed on the fourth side surface (112d) to establish electrical conduction, and the second power transmission unit (22) is disposed corresponding to the fourth side surface (112d), so as to form the fourth state.

10. The socket assembly (100, 200, 300) according to claim 7, wherein the at least one first terminal group (13) comprises one first terminal group (13), wherein the first terminal group (13) is disposed on the first side surface (112a) of the first housing (11), wherein the at least one second terminal group (23) comprises two second terminal groups (23), and the two second terminal groups (23) are disposed on the first inner surface (212a) and the second inner surface (212b), respectively, wherein the second power transmission unit (22) is disposed corresponding to the first inner surface (212a), wherein a connection configuration between the power supply expansion component (2) and the socket (1) is switched between a first state and a second state, wherein the first part (11a) of the first housing (11) is assembled to match the hollow portion (211) of the second housing (21), the first inner surface (212a) is in contact with the first side surface (112a), the first terminal group (13) is in contact with the second terminal group (23) disposed on the first inner surface (212a) to establish electrical conduction, and the second power transmission unit (22) is disposed corresponding to the first side surface (112a), so as to form the first state, wherein the first part (11a) of the first housing (11) is assembled to match the hollow portion (211) of the second housing (21), the second inner surface (212b) is in contact with the first side surface (112a), the first terminal group (13) is in contact with the second terminal group (23) disposed on the second inner surface (212b) to establish electrical conduction, and the second power transmission unit (22) is disposed corresponding to the second side surface (112b), so as to form the second state.

11. The socket assembly (100, 200, 300) according to claim 7, wherein the at least one first terminal group (13) comprises one first terminal group (13), wherein the first terminal group (13) is disposed on the third side surface (112c) of the first housing (11), wherein the at least one second terminal group (23) comprises two second terminal groups (23), and the two second terminal groups (23) are disposed on the third inner surface (212c) and the fourth inner surface (212d), respectively, wherein the second power transmission unit (22) is disposed corresponding to the third inner surface (212c), wherein a connection configuration between the power supply expansion component (2) and the socket (1) is switched between a third state and a fourth state, wherein the first part (11a) of the first housing (11) is assembled to match the hollow portion (211) of the second housing (21), the third inner surface (212c) is in contact with the third side surface (112c), the first terminal group (13) is in contact with the second terminal group (23) disposed on the third inner surface (212c) to establish electrical conduction, and the second power transmission unit (22) is disposed corresponding to the third side surface (112c), so as to form the third state, wherein the first part (11a) of the first housing (11) is assembled to match the hollow portion (211) of the second housing (21), the fourth inner surface (212d) is in contact with the third side surface (112c), the first terminal group (13) is in contact with the second terminal group (23) disposed on the fourth inner surface (212d) to establish electrical conduction, and the second power transmission unit (22) is disposed corresponding to the fourth side surface (112d), so as to form the fourth state.

12. The socket assembly (100, 200, 300) according to claim 1, wherein the socket assembly (100, 200, 300) comprises a fixing component (3), wherein the fixing component (3) is disposed on at least one of the first housing (11) of the socket (1) and the second housing (21) of the power supply expansion component (2), and configured to allow the second housing (21) to be detachably fixed to the first housing (11), wherein the fixing component (3) allows the second housing (21) to be detachably fixed to the first housing (11) by snap-fit, interference fit or magnetic attachment.

13. The socket assembly (100, 200, 300) according to claim 12, wherein the fixing component (3) allows the second housing (21) to be detachably fixed to the first housing (11) by magnetic attachment, wherein the fixing component (3) comprises at least one first magnetic element (31) and at least one second magnetic element (32), the at least one first magnetic element (31) is disposed on the at least one side surface (112) of the first housing (11), the at least one second magnetic element (32) is disposed on the at least one inner surface (212) of the second housing (21), wherein the at least one second magnetic element (32) is configured to detachably and magnetically attach to the at least one first magnetic element (31), so that the second housing (21) is detachably fixed to the first housing (11).

14. The socket assembly (100, 200, 300) according to claim 1, wherein the socket assembly (100, 200, 300) comprises a protection element (4), wherein the protection element (4) is disposed on at least one of the first housing (11) and the second housing (21), or a combination thereof, wherein the first part (11a) of the first housing (11) is assembled to match the hollow portion (211) of the second housing (21), the protection element (4) covers or is clamped within a gap between the first housing (11) and the second housing (21).

15. The socket assembly (100, 200, 300) according to claim 14, wherein the second housing (21) has a second top surface (213), the at least one inner surface (212) is in connection with the periphery of the second top surface (213), wherein the protection element (4) is disposed on the at least one inner surface (212) of the second housing (21) around the hollow portion (211), and is disposed between the at least one second terminal group (23) and the second top surface (213), wherein the first part (11a) of the first housing (11) is assembled to match the hollow portion (211) of the second housing (21), the protection element (4) is clamped between the at least one side surface (112) of the first housing (11) and the at least one inner surface (212) of the second housing (21).
